Europäisches Patentamt

European Patent Office

Office européen des brevets

(11) Publication number: **0 051 419**
**B1**

(12) # EUROPEAN PATENT SPECIFICATION

(45) Date of publication of patent specification: **30.01.85**　　(51) Int. Cl.⁴: **F 16 L 9/16,** F 16 L 11/16

(21) Application number: **81305046.5**

(22) Date of filing: **26.10.81**

(54) Pipe joint.

(30) Priority: **31.10.80 US 202498**

(43) Date of publication of application:
**12.05.82 Bulletin 82/19**

(45) Publication of the grant of the patent:
**30.01.85 Bulletin 85/05**

(84) Designated Contracting States:
**AT BE CH DE FR GB IT LI LU NL SE**

(56) References cited:
**US-A-3 811 478**
**US-A-4 209 043**
**US-A-4 224 965**

(73) Proprietor: **RIB LOC HONG KONG LIMITED**
**1501 Hutchison House**
**Hong Kong (HK)**

(72) Inventor: **Menzel, Stanley William O.**
**11370 North Woodside Avenue**
**Santee California 92071 (US)**

(74) Representative: **Opperman, Stuart Richard et al**
**Haseltine Lake & Co. Hazlitt House 28**
**Southampton Buildings Chancery Lane**
**London WC2A 1AT (GB)**

Courier Press, Leamington Spa, England.

## Description

Menzel U.S. Patent No. 4,209,043 discloses a tubular construction or pipe section which is made from a helically wound strip. The strip has longitudinal edges, a web and at least one reinforcing rib which extends longitudinally on the web between the longitudinal edges. The rib projects radially from the web.

Pipe sections constructed in accordance with the Menzel patent possess numerous advantages, including a high strength-to-weight ratio. The strip can be wound in the field or at a manufacturing facility to form pipe sections of the desired diameter. The strip is automatically locked together as it is wound to form the pipe section.

This invention provides for coupling pipe sections of the type shown and described in the Menzel patent. This is accomplished with a pipe joint which includes at least a first pipe section and a coupling for attachment thereto. The first pipe section is formed from a pipe strip having longitudinal edges, a web and at least one longitudinally extending reinforcing rib on the web between the longitudinal edges. The strip is wound helically into a tubular configuration with the rib extending generally helically and projecting in one radial direction from the web. Means are provided to retain the pipe strip in said tubular configuration.

The coupling is constructed from a coupling strip in essentially the same manner as described above for the first pipe section. However, the coupling strip is wound so that the reinforcing rib of the coupling strip projects in a radial direction generally opposite to the rib of the first pipe section. Accordingly, the first pipe section and the coupling can be threaded together by the ribs thereof to couple the first pipe section to the coupling. A second pipe section can be coupled to the coupling in the same manner or a different manner.

This manner of coupling the first pipe section to the coupling provides many advantages. For example, the coupling strip may be identical to the pipe strip and can be extruded from the same plastic extrusion dies. Accordingly, no additional tooling costs are necessary to produce the coupling strip. However, even if a coupling strip differing somewhat from the pipe strip is desired, the extrusion tooling can be constructed much less expensively than for example, the tooling required for an injection molded coupling.

Because the coupling is formed from the coupling strip, it can also be wound in the field to any desired diameter. Accordingly it is unnecessary to stock an assortment of couplings of different diameters.

The coupling, like the pipe section, has a high strength-to-weight ratio and so a minimum amount of material is required to obtain a coupling of given strength. The coupling can be easily installed on the pipe section in the same manner as a threaded coupling.

The primary functions of the rib are to reinforce the tubular construction of which it forms a part and to form, in effect a screw thread. Any cross-sectional configuration which achieves these two purposes can be utilized, such as most cross-sectional strip configurations of the type illustrated, by way of example, in Menzel U.S. Patent No. 4,209,043, referred to above.

The coupling strip can be identical to, or different from, the pipe strip. However, it is necessary that the ribs of the pipe section and coupling be able to threadedly cooperate to join the pipe section to the coupling. In one form of the invention which is particularly adapted for smaller diameters, the rib of the pipe strip terminates in an enlarged section or head at the free edge of the rib, and the rib of the coupling strip is free of any enlargement at its free edge. To facilitate screwing the coupling and the pipe section together, the coupling rib near one end of the coupling may be of reduced radial dimension.

For many applications, it is desirable to seal the interface between the coupling and the pipe sections, and any suitable sealing means can be provided for this purpose. Although the ribs themselves may be utilized as the sole sealing means, the sealing function can be enhanced by utilizing a sealing composition, which may be of paste-like consistency, between at least some of the ribs. Alternatively, a rubber or other elastomer packing ring or washer can be provided within the coupling and located on its inner surface. The pipe section is screwed into the coupling to bring the terminal end surface of the pipe section to forceably abut this packing ring and thus seal thereagainst.

The pipe strip can be wound with the rib thereof projecting radially inwardly or radially outwardly. However, it will usually be preferred to wind the pipe section with the rib radially outwardly so that the rib does not interfere with the passage of electrical conductors, or other materials therethrough. Accordingly, the coupling strip will ordinarily be wound with the rib projecting radially inwardly.

Of course, the pipe strip and the coupling strip may each include a plurality of the ribs so long as they are arranged so that the pipe section and coupling can be threaded together. Similarly, the pipe strip and the coupling strip can be held together in any suitable manner after said threading, such as by bonding or by utilizing a projection and socket construction as described in the Menzel patent.

The invention, together with further features and advantages thereof, may best be understood by reference to the following description taken in connection with the accompanying illustrative drawings.

Fig. 1 is a fragmentary sectional view on an axial plane of a pipe joint constructed in accordance with the teachings of this invention.

Fig. 2 is a sectional view of a strip taken on a transverse plane.

Fig. 3 is a fragmentary sectional view showing one way of joining the strip together to form a tubular configuration.

Fig. 4 is an elevational view illustrating how the strip can be wound to form a pipe section.

Fig. 5 is a fragmentary sectional view similar to Fig. 1 showing a second embodiment of the pipe joint of this invention.

Fig. 6 is a fragmentary sectional view similar to Fig. 1 showing a third embodiment of the pipe coupling of this invention.

Fig. 7 is a fragmentary sectional view on an axial plane showing a fourth embodiment of the pipe joint of this invention with the coupling being screwed onto the pipe section.

Figs. 8 and 9 are views similar to Fig. 6 showing fifth and sixth embodiments of the pipe joint of this invention.

Fig. 10 is an elevational view illustrating the assembly of the pipe joint with one end of the coupling truncated at an angle.

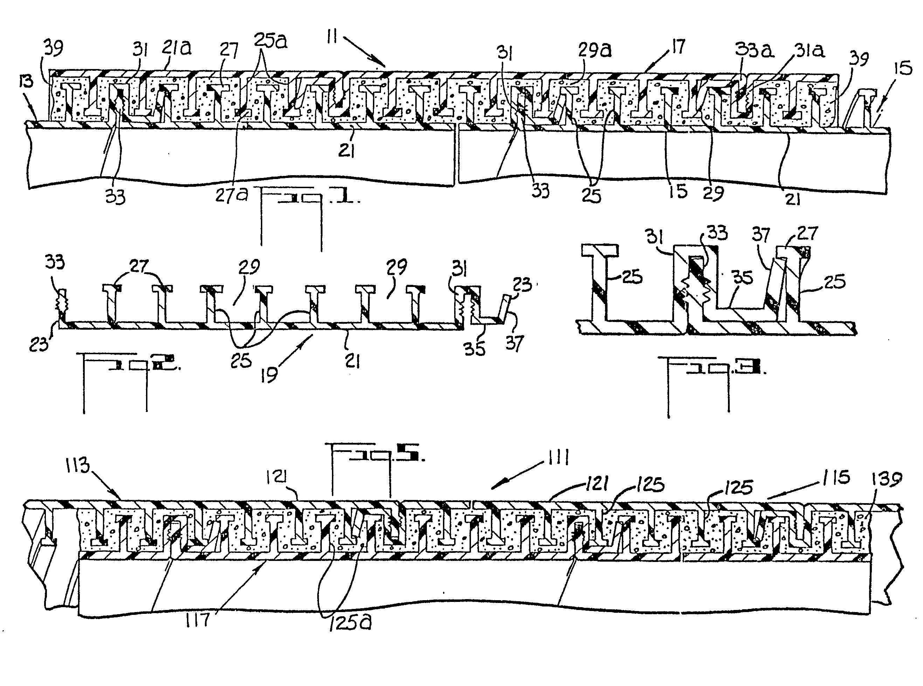

Fig. 1 shows a pipe joint 11 constructed in accordance with the teachings of this invention. The pipe joint 11 includes identical pipe sections 13 and 15 and a coupling 17 for joining the two pipe sections together. Although the pipe sections 13 and 15 may be of different constructions, in the embodiment illustrated, they are identical and corresponding parts are identified by corresponding reference numerals.

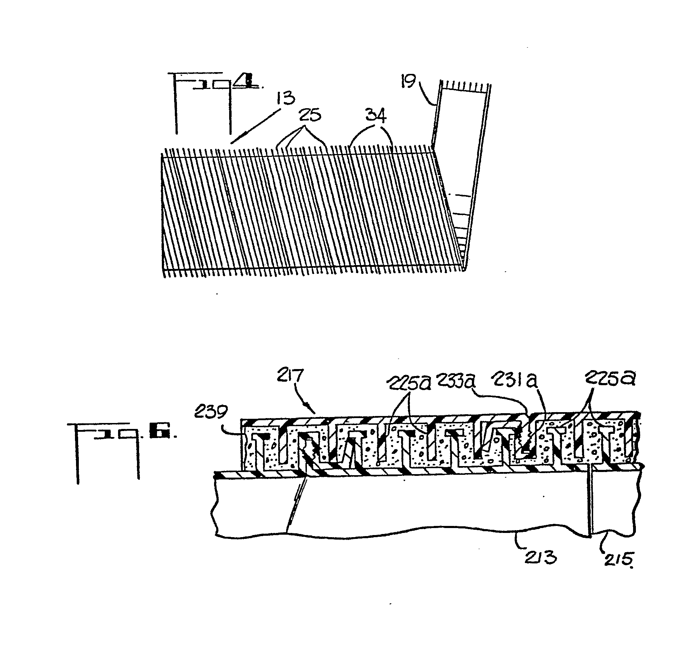

The pipe section 13 is constructed from a pipe strip 19 (Fig. 2). The coupling 17 is constructed from a coupling strip which is identical to the pipe strip 19.

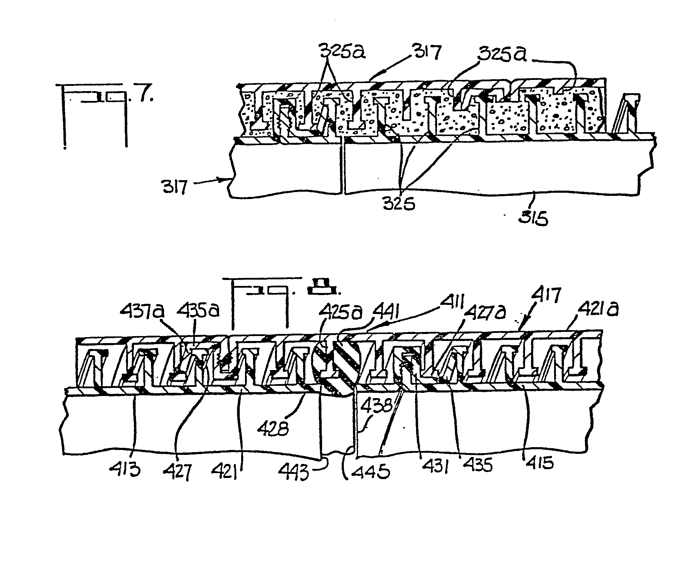

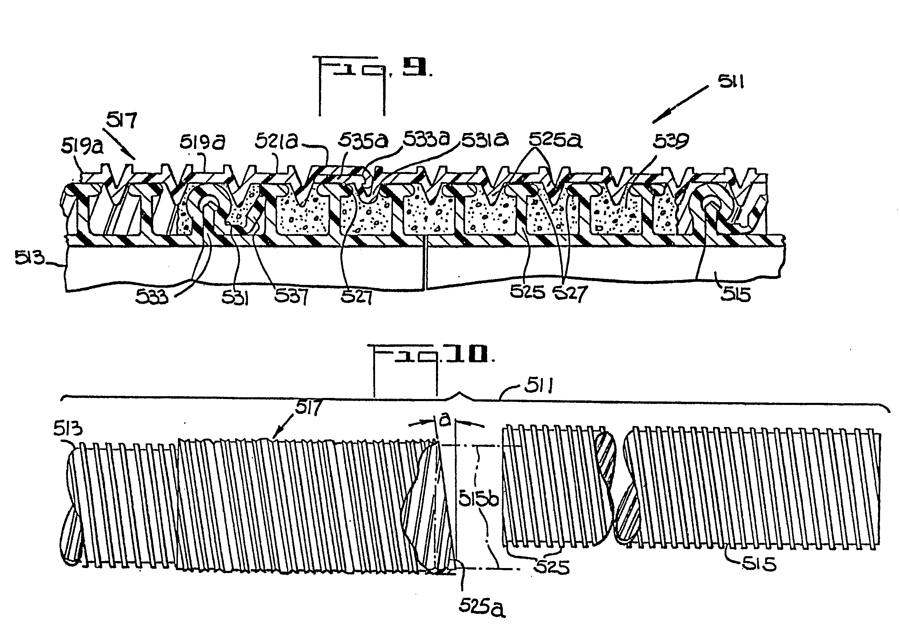

The pipe strip 19 is extruded from a suitable plastic material, such as polyvinylchloride. The pipe strip 19 is sufficiently flexible so that it can be wound into a tubular configuration as shown in Fig. 4 but it is also resilient at ambient temperatures.

Although the strip 19 can be of different cross-sectional configurations, in the embodiment illustrated, it includes a web 21 having parallel longitudinal edges 23 and a plurality of transversely spaced, longitudinally extending reinforcing ribs 25 projecting in parallel relationship in the same direction from the web 21. In the embodiment illustrated, the ribs 25 are equally spaced and project from the web 21. Each of the ribs 25 terminates at its free end in an enlarged section in the form of a flange 27 which extends continuously for the full length of the associated rib 25 and which is perpendicular to the associated rib. All of the ribs 25 are of essentially the same height, and each adjacent pair of the ribs 25 cooperates with an intermediate section of the web 21 to define a channel 29.

The strip 19 is wound as shown in Fig. 4 into a tubular configuration to form the pipe section 13. The strip 19 can be retained in the wound tubular configuration in different ways. However, in the embodiment illustrated, a barbed rib or socket 31 and a barbed rib or projection 33 are provided integral with the web 21 and projecting therefrom in the same direction as the ribs 25. Although different arrangements are possible, the projection 33 lies along one of the longitudinal edges 23 and the socket 31 lies inwardly of the other longitudinal edge 23. The socket 31 is sized to receive the projection 33 as the strip 19 is wound into a tubular configuration to form a helical seam 34.

A section 35 of the web 21 projects laterally outwardly of the socket 31, and a leg 37 projects away from the section 35 in the same general direction as the ribs 25 and the socket 31. As shown in Fig. 3, with the projection 33 received within the socket 31, the leg 37 engages the underside of the flange 27 of the adjacent rib 25 to interlock with the flange. This further assists in holding the projection 33 within the socket 31 and it stiffens the tubular construction adjacent the helical seam 34. In addition to providing this interlock feature, the flanges 27 also stiffen the pipe section 13.

The strip 19 can be wound into a cylindrical configuration as shown in Fig. 4 so that the ribs 25 project radially outwardly. The strip 19 may be wound on a mandrel. If desired, a helix angle may be cut on the edges 23 of the strip 19 so that the ends of the pipe sections 13 and 15 will be "square" rather than "inclined". The pipe section 15 can ge identically wound from an identical pipe strip 19.

The coupling 17 can be wound from a coupling strip identical to the pipe strip 19, except that it is wound such that the ribs 25 project radially inwardly. Portions of the coupling 17 corresponding to portions of the pipe section 13 are designated by corresponding reference numerals followed by the letter "a". The coupling 17 may contain any suitable number of wraps of the coupling strip depending upon the desired axial length of the coupling, and the two wraps shown in Fig. 1 are merely illustrative. Also, as with the pipe sections 13 and 15, the ends of the coupling 17 are preferably "square" rather than "inclined" using a coupling strip cut on a helix angle as set forth above.

A sealing composition 39 in the form of a caulking compound is provided between the coupling 17 and the pipe sections 13 and 15. This provides a watertight seal which prevents the ingress of water into the pipe joint 11. The pipe joint 11 is primarily adapted for carrying telephone cables and the like. Although not intended for use in conveying fluids under pressure, it could be adapted for such use.

To assemble the pipe joint 11, the sealing composition 39, which may be of a paste-like consistency, is placed within the channels 29 of the pipe sections 13 and 15 and/or of the channels 29a of the coupling 17. Thereafter, the coupling can be threaded onto one end of the pipe section 13 and the pipe section 15 can be threaded into the other end of the coupling to bring the confronting ends of the pipe sections 13 and 15 into engagement or into close proximity to each other. Thus, end portions of the pipe sections 13 and 15 are received within the coupling 17. The ribs 25 and 25a, the sockets 31 and 31a and the projection 33a serve as screw threads to retain the pipe sections 13 and 15 within the coupling 17. Of course, both halves of the coupling 17 need not be identical, and the pipe section 15 could be coupled to the righthand end of the coupling 17 using conventional techniques, including solvent bonding. Indeed, the coupling 17 could terminate in any of a number of conventional configurations, such as a flange, a "T", a "Y", an end plug or any other known pipe joint or coupling feature.

Fig. 5 shows a pipe joint 111 which is identical to the pipe joint 11 in all respects not shown or described herein. Portions of the pipe joint 111 corresponding to portions of the pipe joint 11 ar designated by corresponding reference numerals preceded by the numeral "1". The pipe joint 111 is identical to the pipe joint 11, except that with the former, the ribs 125 of the pipe sections 113 and 115 project inwardly from the associated web 121 and the ribs 125a of the coupling 117 project radially outwardly. Thus, the coupling 117 is received within, and is circumscribed by, the pipe sections 113 and 115.

In the embodiment of Figs. 1—4 and in the embodiment of Fig. 5, the inside diameter of the circumscribing member of the pipe joint 11 is at least as great as the outside diameter of the circumscribed member of the pipe joint at the coupling, plus twice the greatest radial dimension of the ribs. This relation exists in the illustrated embodiments of the invention.

Fig. 6 shows a pipe joint 211 which is identical to the pipe joint 11 in all respects not shown or described herein. Portions of the pipe joint 211 corresponding to portions of the pipe joint 11 are designated by corresponding reference characters preceded by the numeral "2". The pipe joint 211 is identical to the pipe joint 11, except that with the former, the ribs 225a of the coupling 217 do not have flanges.

Fig. 7 shows a pipe joint 311 which is identical to the pipe joint 11 in all respects not shown or described herein. Portions of the pipe joint 311 corresponding to portions of the pipe joint 11 are designated by corresponding reference characters preceded by the numeral "3". The pipe joint 311 is identical to the pipe joint 11, except that with the former, the portions of the ribs 325a adjacent the end of the coupling 317 are of progressively increasing radial dimension as they extend axially inwardly. This construction facilitates initiation of threading of the coupling 317 onto the pipe section 315. As shown by way of example in Fig. 7, several of the ribs 325a are of full radial length. The radial dimension of the projection 333a is also reduced such that it is radially shorter than any of the ribs 325a.

Fig. 8 shows a pipe joint 411 which is identical to the pipe joint 11 in all respects not shown or described herein. Portions of pipe joint 411 corresponding to the portions of pipe joint 11 are designated by corresponding reference characters preceded by the numeral "4".

The pipe joint 411 includes a seal means 441 between pipe sections 413 and 415 comprising a resilient, deformable rubber-like seal or washer positioned internally of connector 417 and between the opposing end portions 428 and 438 of the pipe sections 413 and 415, respectively. The washer 441 is of generally annular shape and is preferably cast in place, prior to assembly of the pipe joint 441, onto the inner wall of web 421a and onto those portions of ribs 425a which intersect the annular volume of the washer 441. The washer 441 is configured as shown for sealing against the terminal end surfaces 443 and 445 of the pipe sections 413 and 415, respectively, and preferably the washer is resiliently compressed between the terminal end surfaces 443 and 445 so that the washer can maintain its sealing engagement with the terminal end surfaces even if the pipe sections 413 and 415 move somewhat after they are installed.

Other forms of construction could be used. For example, the washer 441 could be shaped to project inwardly of and axially behind the terminal end surface for engaging the inner surface of the web 421 at the end portion. Also, an annular slot could be machined through the ribs 425a adjacent the terminal end surfaces 443 and 445, and a separate washer could be snapped into place, or the washer 441 could be adhered to ends 427a of the ribs 425a. Also, either pipe section 413 or 415 could include washer 441 positioned on and projecting radially within and axially beyond the terminal end surface 443 and 445, respectively, thereof.

Portions of each pipe section 413 and 415 are forced, in opposite axial directions, into contact with portions of coupling 417. As shown, some of the flanges 427 and 427a are in abutting contact with the adjacent surfaces of section 435a and leg 437a (in the case of flanges (427), and adjacent surfaces of socket 431 and section 435 (in the case of flanges 427a). Thus, threaded and firmly sealed against washer 441, pipe sections 413 and/or 415 may be fixedly held in coupling 417 by providing at least the contacting surfaces as set forth above with an adhesive, such as a solvent adhesive. This adhesive bonding could also be utilized for permanent attachment of pipe sections into connectors of the other embodiments.

Figs. 9 and 10 show a pipe joint 511 which is identical to the pipe joint 11 in all respects not shown or described herein. Portions of the pipe joint 511 corresponding to portions of joint 11 are designated by corresponding reference characters preceded by the numeral "5".

Pipe sections 513 and 515 include ribs 525 with flanges 527 on the distal ends thereof. Socket 531 is more rounded in outer configuration than in the other embodiments. Projection 533 includes a single barb which engages a corresponding single barb on the inner portion of the socket 531.

Coupling 517 of the joint 511 is constructed of a coupling strip of slightly different configuration than has heretofore been described. Ribs 525a on coupling strip 519a are essentially "V" shaped in axial cross section and when formed into the coupling 517, this coupling strip describes an internal configuration of more traditional thread-like nature. The ribs 525a are especially suitable where the coupling 517 is of relatively small diameter since this configuration can be bent or formed into the helical configuration easier than, for example, the rib configuration of Fig. 1. Socket 531a has an outer configuration similar to V-shaped ribs 525a and receives barbed projection 533a as has been described in relation to the projection and socket configuration 533 and 531 of the pipe sections 515 and 513. It should be noted that laterally projecting section 535a is so configured as to define at its inner surface a cylindrical surface when formed into coupling 517, which has a radial dimension similar to the cylindrical surfaces defined by the inner wall of web 521a elsewhere along the width of the coupling strip 519a. This is accomplished in the preferred embodiment by displacing that portion of the web 521a, which overlaps the lateral projection 535a, with the thickness of projection 535a. This displacement of portions 535a and overlapping portion of web 521a permits the flanges 527 on ribs 525 of the pipe sections to slidingly engage the inner wall of the web 517a and the inner wall of the projection 535a when the coupling is threadably engaged on the pipe sections. This should be contrasted with the previously described embodiments wherein the flanges on the ribs of the pipe sections slidingly engage only the inner wall of the lateral extensions in those embodiments. This consequently makes a tighter fit between coupling 517 and the pipe sections 513 and 515, spreading the stress along the entire structure of coupling 517. This configuration also results in more abutting or sliding surfaces at which, for example, solvent bonding of the coupling 517 to the pipe sections can take place.

Fig. 10 shows a preferred method of joining a pipe section 515 to coupling 517 already positioned on the end of pipe section 513. The open end of coupling 517 is truncated in a manner to expose at least some of the ribs 525a to the insertion of the end portion of pipe section 515 from a position laterally to the pipe coupling 517. This truncation is preferably accomplished by cutting the end of coupling 517 at an angle "a" to the plane at right angles to the axis of the coupling. As shown angle "a" is approximately equal to the helix angle of the ribs 525a. A portion of the end of coupling 517 is broken away to show the internal configuration which results. As can be seen, the ribs 525a intersect this end cut. Of course, the ribs 525a would intersect even an end cut which is at right angles to the axis of coupling 517. The angled end cut, however, results in defining the opening of coupling 517 which is substantially larger in size or overall area than would result if it were truncated at right angles to the axis thereof. This in turn exposes ribs 525a (in this case at least three such ribs) to insertion of pipe section 515 from one side of the axis of the coupling. Pipe section 515 can be moved to the position shown by phantom lines 515b, bringing at least one of the ribs 525a in proper engagement between the ribs 525 on pipe section 515 without the necessity of rotating pipe section 515 or coupling 517 relative to one another. In effect, one or more of the ribs 525a has already been threadedly started, which in turn permits easy threading of the rest of the ribs when the pipe section 515 is rotated to bring the end portion thereof into joining engagement within the pipe coupling 517. In contrast, had the pipe coupling 517 been truncated at right angles to the axis thereof, all the ribs 525 and 525a (in the preferred embodiment 8 pair in total) would have to be engaged simultaneously, a potentially difficult task when field conditions are less than ideal. The angle "a" of truncation (relative to the plane perpendicular to the axis of the coupling) is not known to be critical. Clearly, the larger this angle, the greater number of ribs can be mutually engaged by merely laying the end of the pipe section into the opening of the coupling.

## Claims

1. A pipe joint comprising:
a first pipe section (13) formed from a pipe strip (19) having longitudinal edges, a web (21) and at least one longitudinal extending reinforcing rib (25) on the web between the longitudinal edges, said strip being helically wound into a tubular configuration with said rib extending generally helically and projecting in one generally radial direction from the web, said first pipe section including means (31, 33) for retaining said pipe strip in said tubular configuration;
a coupling (17) formed from a coupling strip (19) having longitudinal edges, a web (21) and at least one longitudinally extending reinforcing rib (25) on the web of the coupling strip between the longitudinal edges of the coupling strip, said coupling strip being helically wound into a tubular configuration with said rib of said coupling strip extending generally helically and projecting in a second radial direction from the web of the coupling strip, said second radial direction being generally opposite said one radial direction, said coupling including means (31, 33) for retaining said coupling strip in said tubular configuration thereof; and

the first pipe section and the coupling being threaded together by the ribs thereof to couple the first pipe section to the coupling.

2. A pipe joint as defined in claim 1 further including a second pipe section (15) and means for coupling the second pipe section to the coupling whereby the coupling couples the two pipe sections together.

3. A pipe joint as defined in claim 1 or 2 including sealing means (39) for sealing the interface between the coupling and the first pipe section.

4. A pipe joint as defined in claim 3 wherein said sealing means (39) includes a sealing composition of generally paste-like consistency between the ribs.

5. A pipe joint as defined in claim 1 or 2 wherein said rib (25) of said pipe strip terminates in a free edge and said rib of said pipe strip has an enlarged section (27) at said free edge.

6. A pipe joint as defined in claim 1 or 2 wherein said rib of said coupling strip terminates in a free edge and said free edge of said coupling strip is free of an enlargement at said free edge.

7. A pipe joint as defined in claim 1 or 2 wherein said first pipe section (13) and said coupling (17) are constructed of plastic material and each of said strips is resilient.

8. A pipe joint as defined in claim 2 wherein said retaining means for said coupling includes a socket (31) and a projection (33) both integral with the web of the coupling strip and engageable to retain the coupling strip in its tubular configuration, said socket extending helically along the wound coupling strip and projecting generally in said second radial direction whereby the socket assists in threading the coupling to at least one of the pipe sections.

9. A pipe joint as defined in claim 1 or 2 wherein said rib of the pipe strip is a first rib and the pipe strip includes a second longitudinally extending rib spaced from the first rib, said second rib extending generally helically along the wound pipe strip and projecting in said one radial direction from the web of the pipe strip, said rib of the coupling strip is a third rib and said coupling strip includes a fourth longitudinally extending rib spaced from said third rib, said fourth rib extending generally helically along the wound coupling strip and projecting in said second radial direction from the web of said coupling strip, the axial spacing between said first and second ribs being generally equal to the axial spacing between the third and fourth ribs.

10. A pipe joint as defined in claim 1 or 2 wherein the coupling has an end adjacent said first pipe section and the rib (325a) of the coupling adjacent said end is of reduced radial dimension to facilitate threading the first pipe section and the coupling together.

11. A pipe joint as defined in claim 2 wherein said second pipe section (15) includes a second pipe strip (19) having longitudinal edges, a web (21) and at least one longitudinally extending reinforcing rib (25) on the web thereof between the longitudinal edges thereof, said second pipe strip being helically wound into a tubular configuration with the rib of the second pipe strip extending generally helically and projecting in said one radial direction from the web of the second pipe strip, said second pipe section including means (31, 33) for retaining said second pipe strip in its tubular configuration, said coupling means for the second pipe section includes the second pipe section and the coupling being threaded together by the ribs thereof to couple the second pipe section to the coupling.

12. A pipe joint as defined in claim 1 or 2 wherein said one radial direction is outwardly and said radial direction is inwardly.

13. A pipe joint as defined in claim 12 wherein said first pipe section and said coupling are constructed of plastic and each of said strips is resilient, said rib of said pipe strip terminates in a free edge and said rib of said pipe strip has an enlarged section (27) at said free edge, and said pipe joint includes sealing means (39) between the ribs for sealing the interface between the coupling and the first pipe section.

14. A pipe joint as defined in either claim 1 or 2, wherein a seal (441) is provided within said coupling for sealing against at least one end portion of said first pipe section when said first pipe section is coupled to said coupling.

15. A pipe joint as defined in claim 14 wherein said seal (441) is configured for sealing against at least a terminal end surface of said end portion.

16. A pipe joint as defined in either claim 1 or claim 2 wherein said reinforcing rib on said coupling strip has a generally V-shaped cross section and wherein the reinforcing rib of said pipe strip engages the inner surface of said web of said coupling strip between said V-shaped ribs (525a) when said pipe section and said coupling are threaded together.

17. A pipe joint as defined in either claim 1 or claim 2 wherein said coupling is truncated at least at one end thereof at an angle (a) to the plane perpendicular to the longitudinal axis of said coupling, whereby to permit easy threading together of said coupling and at least said one pipe section.

**Patentansprüche**

1. Rohrverbindung, welche
einen ersten Rohrschuß (13) aufweist, welcher von einem Rohrband (19) gebildet ist, das Längsränder, einen Steg (21) und am Steg zwischen den Längsrändern zumindest eine sich ein Längsrichtung erstreckende Verstärkungsrippe (25) besitzt, wobei dieses Band schraubenförmig zu einem rohrförmigen Gebilde gewickelt ist und die Rippe sich im wesentlichen entlang einer Schraubenlinie erstreckt und vom Steg in einer allgemein radialen Richtung absteht und wobei dieser erste Rohrschuß Mittel (31, 33) zum Haltern des Rohrbandes in der Form des rohrförmigen Gebildes besitzt, und

eine Kupplung (17) aufweist, die von einem Kupplungsband (19) gebildet ist, das Längsränder, einen Steg (21) und am Steg des Kupplungsbandes zwischen den Längsrändern des Kupplungsbandes zumindest eine sich in Längsrichtung erstreckende Verstärkungsrippe (25) besitzt, wobei das Kupplungsband schraubenförmig zu einem rohrförmigen Gebilde gewickelt ist und die Rippe dieses Kupplungsbandes im wesentlichen schraubenförmig verläuft und vom Steg des Kupplungsbandes in einer zweiten radialen Richtung absteht, diese zweite radiale Richtung allgemein entgegengesetzt ist zu der erwähnten einen radialen Richtung und diese Kupplung Mittel (31, 33) zum Haltern des Kupplungsbandes in Form des rohrförmigen Gebildes besitzt,

wobei der erste Rohrschuß und die Kupplung über deren Rippen miteinander verschraubt sind, um den ersten Rohrschuß mit der Kupplung zu verbinden.

2. Rohrverbindung nach Anspruch 1, welche einen zweiten Rohrschuß (15) und Mittel zum Kuppeln des zweiten Rohrschusses an die Kupplung aufweist, womit die Kupplung die zwei Rohrschüsse miteinander verbindet.

3. Rohrverbindung nach Anspruch 1 oder 2, welche Dichtmittel (39) zum Abdichten des Zwischenraumes zwischen der Kupplung und dem ersten Rohrschuß aufweist.

4. Rohrverbindung nach Anspruch 3, in welcher das Dichtmittel (39) eine Dichtmasse im wesentlichen pastenartiger Konsistenz umfaßt und zwischen den Rippen vorgesehen ist.

5. Rohrverbindung nach Anspruch 1 oder 2, worin die Rippe (25) des Rohrbandes in einem freien Rand endet und die Rippe des Rohrbandes an diesem freien Rand einen verdickten Abschnitt (27) aufweist.

6. Rohrverbindung nach Anspruch 1 oder 2, worin die Rippe des Kupplungsbandes in einem freien Rand endet und dieser freie Rand des Kupplungsbandes am freien Rand frei von einer Verdickung ist.

7. Rohrverbindung nach Anspruch 1 oder 2, worin der erste Rohrschuß (13) und die Kupplung (17) aus Kunststoff aufgebaut sind und jedes der Bänder geschmeidig ist.

8. Rohrverbindung nach Anspruch 2, worin das Halterungsmittel für die Kupplung eine Fassung (31) und einen Vorsprung (33) aufweist und Fassung und Vorsprung mit dem Steg des Kupplungsbandes einstückig sind und miteinander in Eingriff gebracht werden können, um das Kupplungsband in seiner rohrförmigen Gestalt zu haltern, wobei sich die Fassung schraubenförmig entlang des gewickelten Kupplungsbandes erstreckt und im wesentlichen in der besagten zweiten radialen Richtung absteht, womit die Fassung das Verschrauben der Kupplung mit zumindest einem der Rohrschüsse unterstützt.

9. Rohrverbindung nach Anspruch 1 oder 2, worin die Rippe des Rohrbandes eine erste Rippe ist und das Rohrband eine mit Abstand von der ersten Rippe verlaufende und sich in Längsrichtung erstreckende zweite Rippe aufweist, wobei die zweite Rippe sich im wesentlichen schraubenförmig entlang des gewickelten Rohrbandes erstreckt und vom Steg des Rohrbandes in der erwähnten einen radialen Richtung absteht, und worin die Rippe des Kupplungsbandes eine dritte Rippe ist und das Kupplungsband eine mit Abstand von der dritten Rippe verlaufende und sich in Längsrichtung erstreckende vierte Rippe aufweist, wobei die vierte Rippe im wesentlichen schraubenförmig entlang des gewickelten Kupplungsbandes verläuft und vom Steg des Kupplungsbandes in der erwähnten zweiten radialen Richtung absteht, und worin der axiale Abstand zwischen der ersten Rippe und der zweiten Rippe im wesentlichen gleich ist dem axialen Abstand zwischen der dritten Rippe und der vierten Rippe.

10. Rohrverbindung nach Anspruch 1 oder 2, worin die Kupplung benachbart dem ersten Rohrschuß ein Ende besitzt und die diesem Ende benachbarte Rippe (325a) der Kupplung verringerte radiale Abmessung besitzt, um das Verschrauben des ersten Rohrschusses mit der Kupplung zu erleichtern.

11. Rohrverbindung nach Anspruch 2, worin der zweite Rohrschuß (15) ein zweites Rohrband (19) aufweist, das Längsränder, einen Steg (21) und am Steg zwischen den Längsrändern desselben zumindest eine sich in Längsrichtung erstreckende Verstärkungsrippe (25) besitzt, wobei das zweite Rohrband schraubenförmig zu einem rohrförmigen Gebilde gewickelt ist und die Rippe des zweiten Rohrbandes sich im wesentlich schraubenförmig erstreckt und vom Steg des zweiten Rohrbandes in der erwähnten einen radialen Richtung absteht und wobei der zweite Rohrschuß Mittel (31, 33) zum Haltern des zweiten Rohrbandes in seiner rohrförmigen Gestalt aufweist und wobei das Kupplungsmittel für den zweiten Rohrschuß den zweiten Rohrschuß und die Kupplung umfaßt, die durch ihre Rippen miteinander verschraubt sind um den zweiten Rohrschuß an die Kupplung zu kuppeln.

12. Rohrverbindung nach Anspruch 1 oder 2, worin die erwähnte eine radiale Richtung nach außen und die erwähnte zweite radiale Richtung nach innen weist.

13. Rohrverbindung nach Anspruch 12, worin der erste Rohrschuß und die Kupplung aus Kunststoff aufgebaut sind und jedes der Bänder geschmeidig ist, wobei die Rippe des Rohrbandes in einem freien Rand endet und diese Rippe des Rohrbandes am freien Rand einen verdickten Abschnitt (27) besitzt und die Rohrverbindung zwischen den Rippen Dichtmittel (39) zum Abdichten des Zwischenraumes zwischen der Kupplung und dem ersten Rohrschuß aufweist.

14. Rohrverbindung nach Anspruch 1 oder 2, worin eine Dichtung (441) in der Kupplung vorgesehen ist, um gegen zumindest einen Endteil des ersten Rohrschusses abzudichten, wenn der erste Rohrschuß an die Kupplung gekuppelt ist.

15. Rohrverbindung nach Anspruch 14, worin die Dichtung (441) so gestaltet ist, daß sie gegen zumindest eine stirnseitige Endfläche des Endteiles abdichtet.

16. Rohrverbindung nach Anspruch 1 oder 2, worin die Verstärkungsrippe am Kupplungsband im wesentlichen V-förmigen Querschnitt besitzt und worin die Verstärkungsrippe am Rohrband an der Innenfläche des Steges des Kupplungsbandes zwischen den V-förmigen Rippen (525a) anliegt, wenn der Rohrschuß und die Kupplung miteinander verschraubt sind.

17. Rohrverbindung nach Anspruch 1 oder 2, worin die Kupplung an zumindest einem ihrer Enden entlang eines Winkels (a) zur auf die Längsachse der Kupplung senkrecht stehenden Ebene beschnitten ist, um ein einfaches Verschrauben der Kupplung und zumindest dem einen Rohrschuß zu ermöglichen.

**Revendications**

1. Assemblage de tuyauteries comportant:
un premier tronçon de tuyauterie (13) réalisé à partir d'une bande de tuyauteries (19) ayant des bordes longitudinaux, une toile (21) et au moins une nervure de renfort (25) longitudinale sur la toile entre les bords longitudinaux, la bande étant enroulée hélicoïdalement en forme de tuyau avec la nervure s'étendant de manière globale en hélice et saillant dans une direction globalement radiale sur la toile, le premier tronçon de tuyauterie comportant un moyen (31, 33) pour maintenir la bande de tuyauterie dans la forme d'un tuyau;
un raccord (17) réalisé à partir d'une bande de raccord (19) ayant des bords longitudinaux, une toile (21) et au moins une nervure de renfort (25) longitudinale sur la toile de la bande de raccord entre les bords longitudinaux de la bande de raccord, cette bande de raccord étant enroulée hélicoïdalement en forme de tuyau avec la nervure de la bande de raccord s'étendant de manière globale en hélice et saillant dans une seconde direction radiale sur la toile de la bande de raccord, cette seconde direction radiale étant globalement opposée à la première direction radiale, ce raccord comportant un moyen (31, 33) pour maintenir la bande de raccord dans la forme de tuyau de celui-ci; et
le premier tronçon de tuyauterie et le raccord étant assemblés par vissage par le nervures de ceux-ci pour raccorder le premier tronçon de tuyauterie au raccord.

2. Assemblage de tuyauteries selon la revendication 1, comportant un second tronçon de tuyauterie (15) et un moyen pour raccorder le second tronçon de tuyauterie au raccord, par lequel le raccord assemble les deux tronçons de tuyauteries.

3. Assemblage de tuyauteries selon la revendication 1 ou 2, comportant un moyen d'étanchéité (39) pour rendre étanche l'interface entre le raccord et le premier tronçon de tuyauterie.

4. Assemblage de tuyauteries selon la revendication 3, dans lequel le moyen d'étanchéité (39) contient une composition d'étanchéité de consistence globalement pâteuse entre les nervures.

5. Assemblage de tuyauteries selon la revendication 1 ou 2, dans lequel la nervure (25) de la bande de tuyauterie se termine par un borde libre et la nervure de la bande de tuyauterie a une partie agrandie (27) au niveau du borde libre.

6. Assemblage de tuyauteries selon la revendication 1 ou 2, dans lequel la nervure de la bande de raccord se termine par un bord libre et le bord libre de la bande de raccord est exempt d'agrandissement au niveau du bord libre.

7. Assemblage de tuyauteries selon la revendication 1 ou 2, dans lequel le premier tronçon de tuyauterie (13) et la raccord (17) sont réalisés en matière plastique et chacune des bandes est élastique.

8. Assemblage de tuyauteries selon la revendication 2, dans lequel de moyen de maintien pour le raccord comporte un creux (31) et une saillie (33) tous deux solidaires de la toile de la bande de raccord et pouvant coopérer pour maintenir la bande de raccord en forme de tuyau, le creux s'étendant hélicoïdalement le long de la bande de raccord enroulée et dirigé globalement dans la seconde direction radiale, grâce à quoi le creux aide à visser le raccord sur au moins un des tronçons de tuyauterie.

9. Assemblage de tuyauteries selon la revendication 1 ou 2, dans lequel la nervure de la bande de tuyauterie est une première nervure et la bande de tuyauterie comporte une seconde nervure longitudinale à l'écart de la première nervure, la seconde nervure s'étendant globalement hélicoïdalement le long de la bande de tuyauterie enroulée et dirigée dans la première direction radiale sur la toile de la bande de tuyauterie, la nervure de la bande de raccord est une troisième nervure et la bande de raccord comporte un quatrième nervure longitudinale à l'écart de la troisième nervure, la quatrième nervure s'étendant globalement hélicoïdalement le long de la bande de raccord enroulée et dirigée dans la seconde direction radiale sur la toile de la bande de raccord, l'écartement axial entre les première et seconde nervures étant généralement égale à l'écartement axial entre les troisième et quatrième nervures.

10. Assemblage de tuyauteries selon la revendication 1 ou 2, dans lequel le raccord a une extrémité contigue au premier tronçon de tuyauterie et la nervure (325a) du raccord contigue à cette extrémité a une dimension radiale réduite pour assembler plus facilement par vissage le premier tronçon de tuyauterie et le raccord.

11. Assemblage de tuyauteries selon la revendication 2, dans lequel le second tronçon de tuyauterie (15) comporte une seconde bande de tuyauterie (19) à bords longitudinaux, toile (21) et au moins une nervure de renfort (25) longitudinale sir la toile de cette bande, la seconde bande de tuyauterie étant enroulée hélicoïdalement en forme de tuyau avec la nervure de la seconde bande de tuyauterie s'étandant globalement hélicoïdalement et dirigée dans la première direction radiale sur la toile de la seconde band de tuyauterie, le second tronçon de tuyauterie comportant un moyen (31, 33) pour maintenir la seconde bande de tuyauterie en forme de tuyau, le moyen de raccordement pour le second tronçon de tuyauterie comporte le second tronçon de tuyauterie et le raccord assemblés par vissage par les nervures de ceuxci pour raccorder la second tronçon de tuyauterie au raccord.

12. Assemblage de tuyauteries selon la revendication 1 ou 2, dans lequel la première direction radiale est vers l'extérieur et la seconde direction radiale vers l'intérieur.

13. Assemblage de tuyauteries selon la revendication 12, dans lequel le premier tronçon de tuyauterie et le raccord sont en plastique et chacune des bandes est élastique, la nervure de la bande de tuyauterie se termine par un bord libre et la nervure de la bande de tuyauterie a une partie agrandie (25) au niveau de ce bord libre, et l'assemblage de tuyauteries comporte un moyen d'étanchéité (39) entre les nervures pour rendre étanche l'interface entre le raccord et le premier tronçon de tuyauterie.

14. Assemblage de tuyauteries selon la revendication 1 ou 2, dans lequel un joint d'étanchéite (441) est réalisé dans le raccord obtenir l'étanchéité avec au moins une extrémité du premier tronçon de tuyauterie quand on assemble le premier tronçon de tuyauterie et le raccord.

15. Assemblage de tuyauteries selon la revendication 14, dans lequel le joint (441) a une forme assurant l'étanchéité avec au moins une surface extrême de l'extrémité.

16. Assemblage de tuyauteries selon la revendication 1 ou 2, dans lequel la nervure de renfort sur la bande de raccord a une section transversale globalement en V et dans lequel la nervure de renfort de la bande de tuyauterie coopère avec la surface interne de la toile de la bande de raccord entre les nervures en V (525a) quand on assemble par vissage le tronçon de tuyauterie et le raccord.

17. Assemblage de tuyauteries selon la revendication 1 ou 2, dans lequel le raccord est tronqué au moins à une de ses extrémités selon un angle (a) par rapport au plan perpendiculaire à l'axe longitudinal du raccord, ce qui permet un assemblage facile par vissage du raccord et d'au moins le tronçon de tuyauterie.

Fig. 1.

Fig. 2.

Fig. 3.

Fig. 5.

0 0 5 1 419

Fig 4.

Fig 6.

2

0051419

Fig. 7.

Fig. 8.

3

Fig. 9.

Fig. 10.

4